# EUROPEAN PATENT APPLICATION

(11) **EP 4 694 433 A1**
(43) Date of publication of application: **11.02.2026**
(21) Application number: 23929500.9
(22) Date of filing: 31.03.2023
(51) Int. Cl.: H04W 72/00

(54) **CHANNEL TRANSMISSION METHOD AND DEVICE, AND STORAGE MEDIUM**

(71) Applicant: Beijing Xiaomi Mobile Software Co., Ltd., Beijing 100085 (CN)
(72) Inventor: WANG, Lei, Beijing 100085 (CN)
(74) Representative: Dehns Germany Partnerschaft mbB
(86) International application number: PCT/CN2023/085744
(87) International publication number: WO 2024/197917

(57) **Abstract**

The present invention provides a channel transmission method and device, and a storage medium. The method includes: receiving resource set indication information sent by a base station, wherein the resource set indication information is used for indicating a resource set of a PUCCH; in response to determining that the PUCCH needs to be transmitted on a plurality of time units and the plurality of time units correspond to at least two time unit types, determining, from the plurality of time units, at least one first time unit for transmitting the PUCCH; on the basis of the resource set and the time unit type of the first time unit, determining resources occupied when the PUCCH is transmitted on each first time unit; and sending the PUCCH to the base station on the resources of each first time unit. The present invention improves the reliability of PUCCH transmission, reduces the scheduling complexity of scheduling the PUCCH transmission by a base station, effectively reduces transmission delay, and improves the reliability of full-duplex communication.

## Description

### TECHNICAL FIELD

The present disclosure relates to the field of communications, and in particular to a channel transmission method and device, and a storage medium.

### BACKGROUND

Full-duplex solutions will be studied in the 3rd Generation Partnership Project (3GPP) Release-18 (Rel-18) duplex enhancement project. Network-side devices are able to simultaneously receive and transmit data within a single time unit.

However, when a terminal needs to transmit a Physical Uplink Control Channel (PUCCH) on multiple time units, and the multiple time units correspond to at least two time unit types, the available uplink resources corresponding to the PUCCH on different types of time units may be different. For example, one type is a downlink time unit or a flexible time unit configured with an uplink subband. On this type of time unit, the terminal uses the frequency domain resources occupied by the uplink subband for uplink transmission. The other type is an uplink time unit without an uplink subband or a flexible time without an uplink subband. On this type of time unit, the terminal can use the frequency domain resources occupied by the uplink bandwidth for uplink transmission. Generally, the frequency domain resource range occupied by the uplink subband is different from the frequency domain resource range occupied by the uplink bandwidth. As a result, the available uplink resources of the PUCCH on these two types of time units are different, resulting in ambiguous terminal behavior.

### SUMMARY

To overcome the problems existing in the related art, the embodiments of the present disclosure provide a channel transmission method and device, and a storage medium.

According to a first aspect of an embodiment of the present disclosure, a channel transmission method is provided, where the method is performed by a terminal and includes:
receiving resource set indication information sent by a base station; where the resource set indication information is used to indicate a resource set of a physical uplink control channel (PUCCH);
in response to determining that the PUCCH needs to be transmitted over a plurality of time units, and the plurality of time units correspond to at least two time unit types, determining at least one first time unit for transmitting the PUCCH among the plurality of time units;
determining, based on the resource set and a time unit type of the first time unit, resources occupied when transmitting the PUCCH in each first time unit; and
sending the PUCCH to the base station on the resource of each first time unit.

According to a second aspect of an embodiment of the present disclosure, a channel transmission method is provided, where the method is performed by a base station and includes:
sending resource set indication information to a terminal; where the resource set indication information is used to indicate a resource set of a physical uplink control channel (PUCCH);
in response to determining that the terminal needs to transmit the PUCCH over a plurality of time units, and the plurality of time units correspond to at least two time unit types, determining, among the plurality of time units, at least one first time unit for the terminal to transmit the PUCCH;
determining, based on the resource set and a time unit type of the first time unit, resources occupied by the terminal when transmitting the PUCCH in each first time unit; and
receiving the PUCCH sent by the terminal on the resource of each first time unit.

According to a third aspect of an embodiment of the present disclosure, a channel transmission device is provided, where the device is applied to a terminal and includes:
a first receiving module, configured to receive resource set indication information sent by a base station; where the resource set indication information is used to indicate a resource set of a physical uplink control channel (PUCCH);
a first determining module, configured to, in response to determining that the PUCCH needs to be transmitted over a plurality of time units, and the plurality of time units correspond to at least two time unit types, determine at least one first time unit for transmitting the PUCCH among the plurality of time units;
a second determining module, configured to determine, based on the resource set and a time unit type of the first time unit, resources occupied when transmitting the PUCCH in each first time unit; and
a first sending module, configured to send the PUCCH to the base station on the resource of each first time unit.

According to a fourth aspect of an embodiment of the present disclosure, a channel transmission device is provided, where the device is applied to a base station and includes:
a second sending module, configured to send resource set indication information to a terminal; where the resource set indication information is used to indicate a resource set of a physical uplink control channel (PUCCH);
a third determining module, configured to, in response to determining that the terminal needs to transmit the PUCCH over a plurality of time units, and the plurality of time units correspond to at least two time unit types, determine, among the plurality of time units, at least one first time unit for the terminal to transmit the PUCCH;
a fourth determining module, configured to determine, based on the resource set and a time unit type of the first time unit, resources occupied by the terminal when transmitting the PUCCH in each first time unit; and
a second receiving module, configured to receive the PUCCH sent by the terminal on the resource of each first time unit.

According to a fifth aspect of an embodiment of the present disclosure, a computer-readable storage medium is provided, where the storage medium stores a computer program, and the computer program is used to execute any one of the above channel transmission methods on the terminal side.

According to a sixth aspect of an embodiment of the present disclosure, a computer-readable storage medium is provided, where the storage medium stores a computer program, and the computer program is used to execute any one of the above channel transmission methods on the base station side.

According to a seventh aspect of an embodiment of the present disclosure, a channel transmission device is provided, including:
a processor; and
a memory for storing processor-executable instructions;
where the processor is configured to execute any one of the above channel transmission methods on the terminal side.

According to an eighth aspect of an embodiment of the present disclosure, a channel transmission device is provided, including:
a processor; and
a memory for storing processor-executable instructions;
where the processor is configured to execute any one of the above channel transmission methods on the base station side.

The technical solutions provided by the embodiments of the present disclosure may have the following beneficial effects:

In the present disclosure, the transmission resources occupied by the terminal when transmitting PUCCH on different types of time units can be clearly defined, ensuring that the terminal and the base station have a consistent understanding of the PUCCH transmission resources, improving the reliability of PUCCH transmission, reducing the scheduling complexity of the base station scheduling PUCCH transmission, effectively reducing transmission delay, and improving the reliability of full-duplex communication.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
FIG. 1 is a schematic flow chart showing a channel transmission method according to an exemplary embodiment.
FIG. 2 is a schematic flow chart showing another channel transmission method according to an exemplary embodiment.
FIG. 3 is a schematic flow chart showing another channel transmission method according to an exemplary embodiment.
FIG. 4 is a schematic flow chart showing another channel transmission method according to an exemplary embodiment.
FIG. 5 is a schematic flow chart showing another channel transmission method according to an exemplary embodiment.
FIG. 6 is a schematic flow chart showing another channel transmission method according to an exemplary embodiment.
FIG. 7 is a schematic flow chart showing another channel transmission method according to an exemplary embodiment.
FIG. 8 is a schematic flow chart showing another channel transmission method according to an exemplary embodiment.
FIG. 9A is a schematic diagram showing a time slot structure according to an exemplary embodiment.
FIG. 9B is a schematic diagram showing a relationship between a downlink BWP and an uplink subband according to an exemplary embodiment.
FIG. 10A is a schematic diagram showing another method of determining time-frequency resources for PUCCH transmission according to an exemplary embodiment.
FIG. 10B is a schematic diagram showing another method of determining time-frequency resources for PUCCH transmission according to an exemplary embodiment.
FIG. 11A is a schematic diagram showing another method of determining time-frequency resources for PUCCH transmission according to an exemplary embodiment.
FIG. 11B is a schematic diagram showing another method of determining time-frequency resources for PUCCH transmission according to an exemplary embodiment.
FIG. 12 is a schematic diagram showing another method of determining time-frequency resources for PUCCH transmission according to an exemplary embodiment.
FIG. 13 is a block diagram showing a channel transmission device according to an exemplary embodiment.
FIG. 14 is a block diagram showing another channel transmission device according to an exemplary embodiment.
FIG. 15 is a schematic structural diagram of a channel transmission device according to an exemplary embodiment of the present disclosure.
FIG. 16 is a schematic structural diagram of another channel transmission device according to an exemplary embodiment of the present disclosure.

### DETAILED DESCRIPTION

Exemplary embodiments will be described in detail herein, examples of which are illustrated in the accompanying drawings. In the following description, when referring to the drawings, like numbers in different figures represent like or similar elements unless otherwise indicated. The embodiments described in the following exemplary embodiments are not intended to represent all possible embodiments consistent with the present invention. Rather, they are merely examples of apparatus and methods consistent with some aspects of the invention as recited in the appended claims.

The terms used in this disclosure are for the purpose of describing specific embodiments only and are not intended to limit the disclosure. As used in this disclosure and the appended claims, the singular forms "a/an", "said" and "the" are intended to include the plural forms, unless the context clearly indicates otherwise. It should also be understood that the term "and/or" as used herein refers to and encompasses any and all possible combinations of at least one of the associated listed items.

It should be understood that although the terms first, second, third, etc. may be used in this disclosure to describe various information, such information should not be limited to these terms. These terms are only used to distinguish information of the same type from each other. For example, without departing from the scope of this disclosure, a first message may also be referred to as a second message, and similarly, a second message may also be referred to as a first message. Depending on the context, the word "if" as used herein may be interpreted as "at the time of" or "when" or "in response to determining".

In the SBFD mode, a time division duplex (TDD) carrier may be divided into multiple subbands to support simultaneous transmission and reception in the same time unit (e.g., time slot).

Full-duplex terminals can perform uplink transmission on the uplink subband (UL subband) within the downlink slot (DL slot). However, according to the protocol, the base station does not expect terminals to transmit PUCCHs in DL slots. Therefore, terminals can only transmit PUCCHs in UL slots. This limits the benefits on latency and reliability of the full-duplex technology and also brings certain restrictions to the scheduling flexibility of the network.

On the other hand, different types of time units, such as slots or symbols, have different available uplink resources. For example, for a UL symbol or UL slot, all uplink resource blocks (RBs) included in the activated UL BWP can be used for PUCCH transmission. For a subband full-duplex (SBFD) time unit, such as an SBFD symbol or SBFD slot, only the UL RBs included in the UL subband can be used for PUCCH transmission. Generally speaking, the frequency domain resource range occupied by the UL subband is different from the uplink bandwidth part (BWP). Based on this, if a terminal needs to transmit PUCCH in these two time units, the occupied frequency domain resources may be different.

In the present disclosure, a base station may configure available PUCCH resources for a terminal through a system message, such as a System Information Block 1 (SIB1) or a terminal-specific Radio Resource Control (RRC) message. Specifically, the following two parameters may be used for the configuration:
PUCCH public configuration (PUCCH-ConfigCommon); and
PUCCH configuration (PUCCH-Config).

The terminal determines the resource set available for PUCCH transmission in each uplink BWP according to the configuration parameters in the above message. Furthermore, the base station instructs the time-frequency resources occupied by the terminal to transmit the PUCCH in the specified UL slot or flexible slot through dynamic signaling such as downlink control information (DCI) or an RRC message.

According to the protocol, PUCCH can only be transmitted within an activated uplink BWP. This means that an SBFD terminal can only send PUCCH on PUCCH resources in legacy uplink time units, which can lead to the following problems:
Hybrid Automatic Repeat request-ACKnowledgement (HARQ-ACK) feedback information cannot be transmitted in a timely manner, thus limiting the benefits on latency of the SBFD technology;
When scheduling, the base station must avoid scheduling the PUCCH resources of the SBFD terminal on the DL slot, which increases the scheduling complexity; and
The terminal cannot use the UL subband to perform repetition transmission of the PUCCH, thereby affecting the reliability and transmission delay of the PUCCH.

On the other hand, if only unified PUCCH resource configuration and indication are considered, that is, if the different amounts of available uplink resources in different time units are not considered, for full-duplex technology, the terminal can perform uplink transmission in the DL slot, but only the frequency domain resources within the UL subband can be used for uplink transmission. Because the frequency domain resource range occupied by the UL subband is generally smaller than the frequency domain resource range occupied by the uplink BWP, it is necessary to consider how to allocate frequency domain resources for the PUCCH when the PUCCH transmission spans different time domain resource types.

In order to solve the above technical problems, the present disclosure provides the following channel transmission method, device, and storage medium, which can clarify the transmission resources occupied by the terminal when transmitting PUCCH on different types of time units, ensure that the terminal and the base station have a consistent understanding of the PUCCH transmission resources, improve the reliability of PUCCH transmission, reduce the scheduling complexity of the base station scheduling PUCCH transmission, effectively reduce the transmission delay, and improve the reliability of full-duplex communication.

Hereinafter, the channel transmission method provided by the present disclosure will be first introduced from the terminal side.

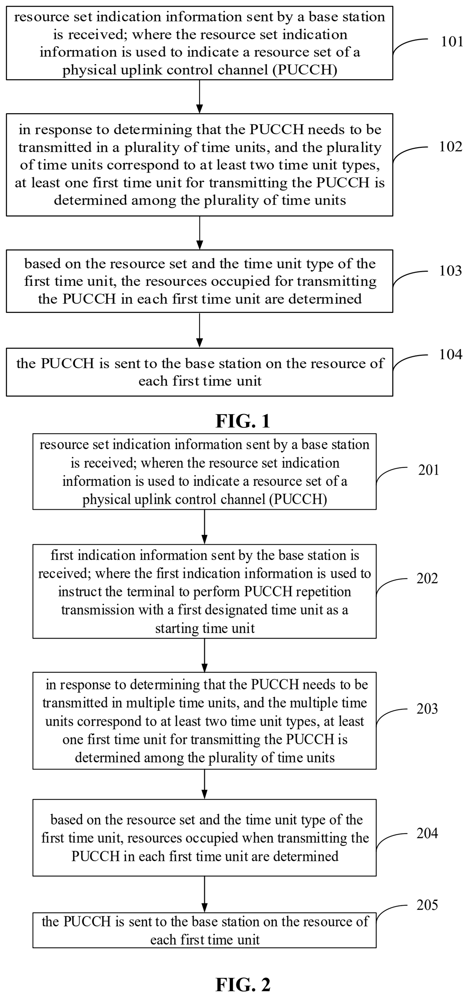

An embodiment of the present disclosure provides a channel transmission method. As shown in FIG. 1, which is a flow chart of a channel transmission method according to an embodiment. The method can be executed by a terminal, and may include the following steps:

In step 101, resource set indication information sent by a base station is received; where the resource set indication information is used to indicate a resource set of a physical uplink control channel (PUCCH).

In an embodiment of the present disclosure, the terminal can receive the resource set indication information sent by the base station through a system message or a terminal-specific RRC message, and the terminal determines the resource set of the PUCCH configured by the base station based on the PUCCH-ConfigCommon parameter in the system message or the PUCCH-Config parameter in the RRC message.

In the embodiment, the PUCCH resources included in the resource set configured by the base station may include but are not limited to available time domain resources and/or available frequency domain resources of PUCCH, and the number of PUCCH resources included in the resource set may be one or more, which is not limited in this disclosure.

In step 102, in response to determining that the PUCCH needs to be transmitted in a plurality of time units, and the plurality of time units correspond to at least two time unit types, at least one first time unit for transmitting the PUCCH is determined among the plurality of time units.

In the embodiment of the present disclosure, the terminal may determine that the PUCCH needs to be transmitted over multiple time units based on the configuration or instruction of the base station, for example, based on downlink control information or radio resource control messages sent by the base station.

In the embodiment of the present disclosure, the at least two time unit types may include: a first type, which is configured with an uplink subband and the transmission direction is downlink or flexible; and a second type, which is not configured with an uplink subband and the transmission direction is uplink or flexible.

For example, the first type can be defined as a sub-band full duplex (SBFD) time unit. The SBFD time unit can be in units of orthogonal frequency division multiplexing (OFDM) symbols, spans, slots, etc., which are not limited in this disclosure. A span includes multiple consecutive symbols.

The SBFD time unit may be a downlink time unit configured with an uplink subband, or may be a flexible time unit configured with an uplink subband.

For example, the second type may be defined as a non-subband full-duplex (non-SBFD) time unit. The non-SBFD time unit may be in units of OFDM symbols, spans, slots, etc., which are not limited in this disclosure. The second type may be a time unit in which the frequency domain resources occupied by the uplink BWP can be used.

In one example, a non-SBFD time unit is an uplink time unit that is not configured with an uplink subband. Although the uplink subband is not configured on the uplink time unit, the uplink BWP configured by the base station is located on the uplink time unit. Therefore, in the uplink time unit that is not configured with an uplink subband, the terminal can use the frequency domain resources included in the uplink BWP for uplink transmission.

In another example, a non-SBFD time unit may be a flexible time unit that is not configured with an uplink subband. The transmission direction of the flexible time unit can be reconfigured by the base station based on scheduling. Therefore, the base station can configure the transmission direction of the flexible time unit as uplink based on scheduling, so that the terminal can use the frequency domain resources included in the uplink BWP for uplink transmission in the flexible time unit that is not configured with an uplink subband.

In a possible implementation manner, the terminal may determine the time unit of the first type among the plurality of time units as the first time unit for transmitting the PUCCH.

In another possible implementation manner, the terminal may determine the time unit of the second type among the plurality of time units as the first time unit for transmitting the PUCCH.

In another possible implementation, the terminal may determine the time units of the first type and the second type among the plurality of time units as the first time units for transmitting the PUCCH.

The method for determining the first time unit will be introduced in subsequent embodiments and will not be introduced here.

In step 103, based on the resource set and the time unit type of the first time unit, the resources occupied for transmitting the PUCCH in each first time unit are determined.

In an embodiment of the present disclosure, the terminal may determine the resources occupied when transmitting the PUCCH in each first time unit based on the PUCCH resource set configured by the base station and the time unit type of the first time unit for transmitting the PUCCH. The resources occupied when transmitting the PUCCH in each first time unit determined herein include but are not limited to time domain resources and frequency domain resources.

For example, the first time unit is in slots, and the terminal may determine the symbol position and frequency domain position for transmitting the PUCCH in each slot.

In one possible implementation, the first time unit is a first type of time unit, that is, the first time unit is an SBFD time unit, then the terminal can determine that the resources occupied when transmitting PUCCH on the first time unit are located in the frequency domain within the frequency domain resource range occupied by the uplink subband.

In another possible implementation, the first time unit is a second type of time unit, that is, the first time unit is a non-SBFD time unit, then the terminal can determine that the resources occupied when transmitting PUCCH on the first time unit are located in the frequency domain within the frequency domain resource range occupied by the uplink BWP.

In step 104, the PUCCH is sent to the base station on the resource of each first time unit.

In the embodiment of the present disclosure, the terminal may use the time domain resources and/or frequency domain resources determined in step 103 above in each first time unit to send the PUCCH to the base station.

In the above embodiments, the transmission resources occupied by the terminal when transmitting PUCCH on different types of time units can be clearly defined, ensuring that the terminal and the base station have a consistent understanding of the PUCCH transmission resources, improving the reliability of PUCCH transmission, reducing the scheduling complexity of the base station scheduling PUCCH transmission, effectively reducing transmission delay, and improving the reliability of full-duplex communication.

In some optional embodiments, when configuring the resource set of PUCCH, the base station may not distinguish between the time unit types, that is, the base station uniformly configures the resource set of PUCCH for the above-mentioned first type of time unit and second type of time unit. Furthermore, the base station can instruct the terminal to perform PUCCH transmission for different types of time units respectively.

For non-periodic PUCCH transmission, the terminal can enable PUCCH repetition when coverage enhancement is required. In this case, the terminal can perform PUCCH repetition in consecutive available time units. Referring to FIG. 2, FIG. 2 is a flow chart of a channel transmission method according to an embodiment, which can be performed by the terminal. The method may include the following steps:

In step 201, resource set indication information sent by a base station is received; where the resource set indication information is used to indicate a resource set of a physical uplink control channel (PUCCH).

In an embodiment of the present disclosure, the terminal can receive the resource set indication information sent by the base station through a system message or a terminal-specific RRC message, and the terminal determines the resource set of the PUCCH configured by the base station based on the PUCCH-ConfigCommon parameter in the system message or the PUCCH-Config parameter in the RRC message.

The resource set includes a first resource set configured by the base station for the terminal based on the uplink bandwidth part (BWP).

In an embodiment of the present disclosure, the first resource set may include one or more first resources that can be used by terminals for PUCCH transmission. The first resources may include but are not limited to time domain resources and/or frequency domain resources, and the present disclosure does not limit the number of first resources.

In step 202, first indication information sent by the base station is received; where the first indication information is used to instruct the terminal to perform PUCCH repetition transmission with a first designated time unit as a starting time unit.

In the embodiment of the present disclosure, the first designated time unit may be a first type of time unit or a second type of time unit, which is not limited in the present disclosure.

In step 203, in response to determining that the PUCCH needs to be transmitted in multiple time units, and the multiple time units correspond to at least two time unit types, at least one first time unit for transmitting the PUCCH is determined among the plurality of time units.

In an embodiment of the present disclosure, the terminal may determine that PUCCH repetition needs to be performed over multiple time units based on the configuration or instruction of the base station. Accordingly, the terminal may determine at least one first time unit in the following manner:

In one possible implementation, the terminal may use the first designated time unit as the starting time unit of the PUCCH repetition, and determine the time unit of the first designated time unit type after the first indication time unit as the first time unit, where the first designated time unit type is the time unit type of the first designated time unit.

For example, the first designated time unit is a first type of time unit, and the first designated time unit is slot#3. Then the terminal can start from slot#3 and determine the first type of time units, assuming slot#3, slot#4, slot#7, and slot#8, as the first time unit.

In another possible implementation, if the terminal determines that the first resource indicated by the base station for use by the terminal through a DCI or RRC message is located in the frequency domain resource range occupied by the uplink subband in the frequency domain, the terminal can use the first designated time unit as the starting time unit and determine the first type of time unit and the second type of time unit among the multiple time units as the first time unit.

For example, the first designated time unit is slot#3, the resource identifier of the first resource indicated by the base station is 1, and resource #1 is located in the frequency domain resource range occupied by the uplink subband in the frequency domain. Then the terminal can determine the first type of time unit and the second type of time unit in multiple time units, assuming slot#3 (first type of time unit), slot#4 (first type of time unit, slot#5 (second type of time unit) and slot#6 (second type of time unit), as the first time unit.

In another possible implementation, if the terminal determines that the first resource indicated by the base station for use by the terminal through a DCI or RRC message is located outside the frequency domain resource range occupied by the uplink subband in the frequency domain, the terminal determines that the first resource cannot be used for uplink transmission on the uplink subband. Therefore, the terminal can use the first designated time unit as the starting time unit and determine the time unit of the first designated time unit type among multiple time units as the first time unit, and the first designated time unit type is the time unit type of the first designated time unit.

For example, the first designated time unit is slot#3, slot#3 is the second type of time unit, the resource identifier of the first resource indicated by the base station is 1, and resource #1 is located outside the frequency domain resource range occupied by the uplink subband in the frequency domain. Then the terminal can determine the second type of time unit among multiple time units, assuming slot#3 and slot#4, as the first time unit.

In step 204, based on the resource set and the time unit type of the first time unit, resources occupied when transmitting the PUCCH in each first time unit are determined.

In one possible implementation, the terminal may determine that when transmitting the PUCCH in the first time unit of the first type, the occupied resources include the first resource instructed by the base station to be used by the terminal, and the first resource is located in the frequency domain within the frequency domain resource range occupied by the uplink subband. The first resource is from the first resource set.

In another possible implementation, the terminal may determine that when transmitting the PUCCH in the first time unit of the second type, the occupied resources include the first resource. The first resource is from the first resource set, and in this case, the first resource is located in the frequency domain resource range occupied by the uplink BWP in the frequency domain.

In step 205, the PUCCH is sent to the base station on the resource of each first time unit.

In the embodiment of the present disclosure, the terminal may use the resources determined in step 204 above in each first time unit to send the PUCCH to the base station.

In the above embodiments, the transmission resources occupied by the terminal when non-periodically transmitting PUCCH on different types of time units can be clarified, ensuring that the terminal and the base station have a consistent understanding of the PUCCH transmission resources, improving the reliability of PUCCH transmission, reducing the scheduling complexity of the base station scheduling PUCCH transmission, effectively reducing transmission delay, and improving the reliability of full-duplex communication.

In some optional embodiments, when configuring the PUCCH resource set, the base station can distinguish the time unit type, that is, the base station configures the corresponding PUCCH resource set for the above-mentioned first type of time unit and second type of time unit respectively. Furthermore, the base station may not distinguish the time unit type and uniformly instruct the terminal to perform PUCCH transmission.

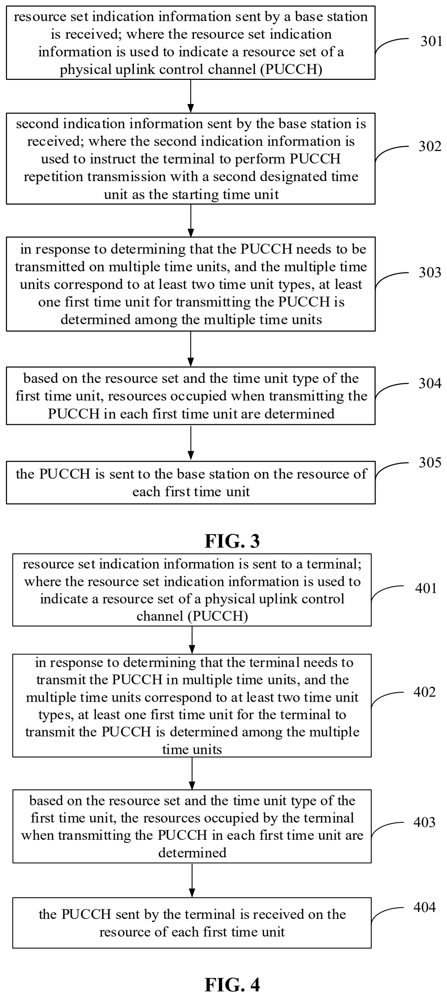

For non-periodic PUCCH transmission, the terminal may enable PUCCH repetition. In this case, the terminal performs PUCCH repetition in consecutive available time units. As shown in FIG. 3, FIG. 3 is a flow chart of a channel transmission method according to an embodiment, which may be performed by the terminal. The method may include the following steps:

In step 301, resource set indication information sent by a base station is received; where the resource set indication information is used to indicate a resource set of a physical uplink control channel (PUCCH).

In an embodiment of the present disclosure, the terminal can receive the resource set indication information sent by the base station through a system message or a terminal-specific RRC message, and the terminal determines the resource set of the PUCCH configured by the base station based on the PUCCH-ConfigCommon parameter in the system message or the PUCCH-Config parameter in the RRC message.

The resource set may include: a second resource set corresponding to the first type; and a third resource set corresponding to the second type.

The number of second resources included in the second resource set may be one or more, and the number of third resources included in the third resource set may also be one or more, which is not limited in this disclosure. The second resources may include time domain resources and/or frequency domain resources, and the third resources may include time domain resources and/or frequency domain resources.

In step 302, second indication information sent by the base station is received; where the second indication information is used to instruct the terminal to perform PUCCH repetition transmission with a second designated time unit as the starting time unit.

In the embodiment of the present disclosure, the second designated time unit may be a first type of time unit or a second type of time unit, which is not limited in the present disclosure.

In step 303, in response to determining that the PUCCH needs to be transmitted on multiple time units, and the multiple time units correspond to at least two time unit types, at least one first time unit for transmitting the PUCCH is determined among the multiple time units.

In an embodiment of the present disclosure, the terminal determines that PUCCH repetition needs to be performed over multiple time units based on the configuration or instruction of the base station, then the terminal may determine the first time unit in the following manner:
In one possible implementation, the terminal uses the second designated time unit as the starting time unit and determines a time unit of the second designated time unit type as the first time unit, where the second designated time unit type is the time unit type of the second designated time unit.

For example, the second designated time unit is a first type of time unit, and the first designated time unit is slot#0, then the terminal can start from slot#0 and determine the first type of time units, assuming slot#0, slot#1, slot#2, and slot#3, as the first time unit.

In another possible implementation, if the terminal determines that the second resource indicated by the base station for use through a DCI or RRC message is located in the frequency domain resource range occupied by the uplink subband in the frequency domain, the terminal can use the second designated time unit as the starting time unit and determine both subsequent first type time units and second type time units as first time units.

In another possible implementation, if the terminal determines that the second resource that the base station indicates the terminal to use through a DCI or RRC message is located outside the frequency domain resource range occupied by the uplink subband in the frequency domain, the terminal may use the second designated time unit as the starting time unit and determine the time unit of the second designated time unit type as the first time unit. The second designated time unit type is the time unit type of the second designated time unit.

In step 304, based on the resource set and the time unit type of the first time unit, resources occupied when transmitting the PUCCH in each first time unit are determined.

In an embodiment of the present disclosure, in response to determining that the first time unit is a first type of time unit, the terminal determines that the resources include a second resource that the base station indicates the terminal to use through a DCI or RRC message, and in response to determining that the first time unit is a second type of time unit, the terminal determines that the resources include a third resource that the base station indicates the terminal to use through a DCI or RRC message.

The second resource comes from the second resource set, and the third resource comes from the third resource set.

In step 305, the PUCCH is sent to the base station on the resource of each first time unit.

In the embodiment of the present disclosure, the terminal may use the resources determined in step 304 above in each first time unit to send the PUCCH to the base station.

In the above embodiments, the transmission resources occupied by the terminal when non-periodically transmitting PUCCH on different types of time units can be clarified, ensuring that the terminal and the base station have a consistent understanding of the PUCCH transmission resources, improving the reliability of PUCCH transmission, reducing the scheduling complexity of the base station scheduling PUCCH transmission, effectively reducing transmission delay, and improving the reliability of full-duplex communication.

In some optional embodiments, when configuring the PUCCH resource set, the base station can distinguish the time unit type, that is, the base station configures the corresponding PUCCH resource set for the above-mentioned first type of time unit and second type of time unit respectively. Furthermore, the base station may not distinguish the time unit type and uniformly instruct the terminal to perform PUCCH transmission.

For non-periodic transmission of PUCCH, the terminal enables PUCCH repetition. In this case, the terminal performs PUCCH repetition in consecutive available time units.

The terminal may receive downlink control information (DCI) sent by the base station, where the terminal may determine, based on a PUCCH resource indicator (PRI) field included in the DCI, the second resource and the third resource that the base station instructs the terminal to use.

In one example, the DCI includes a first PRI field and a second PRI field, where the first PRI field is used to indicate the second resource, and the second PRI field is used to indicate the third resource.

The base station indicates the identifier of the second resource by the bit value of the three bits occupied by the first PRI field, and indicates the identifier of the third resource by the bit value of the three bits occupied by the second PRI field. The terminal has determined the second resource set and the third resource set through a system message or RRC message sent by the base station.

The resource set indexes corresponding to different bit values may be agreed upon through a protocol, as shown in Table 1, for example.

**Table 1**

| Bit value | Resource Identifier |
|---|---|
| 000 | 1 |
| 001 | 2 |
| 010 | 3 |
| ... | ... |

Assuming that the bit value of the bits occupied by the first PRI is 000 and the bit value of the 3 bits occupied by the second PRI is 010, the terminal can determine resource #1 in the second resource set as the second resource used by the terminal, and determine resource #3 in the third resource set as the third resource used by the terminal.

In another example, the DCI includes a third PRI field, and the third PRI field is used to jointly indicate the second resource and the third resource.

The combination of resource identifiers corresponding to different bit values can be agreed upon through a protocol, as shown in Table 2, for example.

**Table 2**

| Bit value | The identifier of the second resource & the identifier of the third resource |
|---|---|
| 000 | 1&1 |
| 001 | 2&1 |
| 010 | 3&2 |
| ... | ... |

Assuming that the bit values of the three bits occupied by the third PRI field are 000, the terminal can determine, according to Table 2, that the second resource is resource #1 in the second resource set, and the third resource is resource #1 in the third resource set.

Optionally, the base station can indicate the identifier of the second resource and the identifier of the third resource through different RRC messages, or indicate the identifier of the second resource and the identifier of the third resource through the same RRC message. The indication method is similar to the indication method through the PRI field of DCI, and will not be repeated here.

In the above embodiment, the terminal can receive the DCI sent by the base station to determine the second resource and the third resource that the base station instructs the terminal to use, which is simple to implement and has high availability.

Next, the channel transmission method provided by the present disclosure will be further introduced from the base station side.

An embodiment of the present disclosure provides a channel transmission method. As shown in FIG. 4, FIG. 4 is a flow chart of a channel transmission method according to an embodiment, which can be performed by a base station. The method may include the following steps:

In step 401, resource set indication information is sent to a terminal; where the resource set indication information is used to indicate a resource set of a physical uplink control channel (PUCCH).

In an embodiment of the present disclosure, the base station may send the resource set indication information to the terminal through a system message or a terminal-specific RRC message, and configure the PUCCH resource set for the terminal through the PUCCH-ConfigCommon parameter in the system message or the PUCCH-Config parameter in the RRC message.

In the embodiment, the PUCCH resources included in the resource set configured by the base station may include but are not limited to available time domain resources and/or available frequency domain resources of PUCCH, and the number of PUCCH resources included in the resource set may be one or more, which is not limited in this disclosure.

In step 402, in response to determining that the terminal needs to transmit the PUCCH in multiple time units, and the multiple time units correspond to at least two time unit types, at least one first time unit for the terminal to transmit the PUCCH is determined among the multiple time units.

In the embodiment of the present disclosure, the base station determines that the terminal needs to transmit the PUCCH over multiple time units through configuration or instruction, for example, the base station sends downlink control information or radio resource control message to the terminal.

In the embodiment of the present disclosure, the at least two time unit types may include: a first type, which is configured with an uplink subband and the transmission direction is downlink or flexible; and a second type, which is not configured with an uplink subband and the transmission direction is uplink or flexible.

For example, the first type may be defined as an SBFD time unit, which may be in units of OFDM symbols, spans, slots, etc., which are not limited in the present disclosure. A span includes multiple consecutive symbols.

The SBFD time unit may be a downlink time unit configured with an uplink subband, or may be a flexible time unit configured with an uplink subband.

For example, the second type may be defined as a non-SBFD time unit. The non-SBFD time unit may be in units of OFDM symbols, spans, slots, etc., which are not limited in this disclosure. The second type may be a time unit that can use frequency domain resources occupied by the uplink BWP.

In one example, a non-SBFD time unit is an uplink time unit that is not configured with an uplink subband. Although the uplink subband is not configured on the uplink time unit, the uplink BWP configured by the base station is located on the uplink time unit. Therefore, in the uplink time unit that is not configured with an uplink subband, the terminal can use the frequency domain resources included in the uplink BWP for uplink transmission.

In another example, a non-SBFD time unit may be a flexible time unit that is not configured with an uplink subband. The transmission direction of the flexible time unit can be reconfigured by the base station based on scheduling. Therefore, the base station can configure the transmission direction of the flexible time unit as uplink based on scheduling, so that the terminal can use the frequency domain resources included in the uplink BWP for uplink transmission in the flexible time unit that is not configured with an uplink subband.

In a possible implementation, the base station may determine the time unit of the first type among multiple time units as the first time unit for transmitting the PUCCH.

In another possible implementation manner, the base station may determine the time unit of the second type among multiple time units as the first time unit for transmitting the PUCCH.

In another possible implementation manner, the base station may determine the time units of the first type and the second type among multiple time units as the first time units for transmitting the PUCCH.

The method for determining the first time unit will be introduced in subsequent embodiments and will not be introduced here.

In step 403, based on the resource set and the time unit type of the first time unit, the resources occupied by the terminal when transmitting the PUCCH in each first time unit are determined.

In an embodiment of the present disclosure, a base station may determine, based on a PUCCH resource set configured for a terminal and a time unit type of a first time unit for the terminal to transmit the PUCCH, the resources occupied by the terminal when transmitting the PUCCH in each first time unit. The resources occupied when transmitting the PUCCH in each first time unit determined herein include, but are not limited to, time domain resources and frequency domain resources.

In one possible implementation, the first time unit is a first type of time unit, that is, the first time unit is an SBFD time unit, then the base station can determine that the resources occupied by the terminal when transmitting PUCCH on the first time unit are located in the frequency domain within the frequency domain resource range occupied by the uplink subband.

In another possible implementation, the first time unit is a second type of time unit, that is, the first time unit is a non-SBFD time unit, then the base station can determine that the resources occupied by the terminal when transmitting PUCCH on the first time unit are located in the frequency domain within the frequency domain resource range occupied by the uplink BWP.

In step 404, the PUCCH sent by the terminal is received on the resource of each first time unit.

In the embodiment of the present disclosure, the base station may receive the PUCCH sent by the terminal on the time domain resources and/or frequency domain resources determined in each first time unit.

In the above embodiments, the transmission resources occupied by the terminal when transmitting PUCCH on different types of time units can be clearly defined, ensuring that the terminal and the base station have a consistent understanding of the PUCCH transmission resources, improving the reliability of PUCCH transmission, reducing the scheduling complexity of the base station scheduling PUCCH transmission, effectively reducing transmission delay, and improving the reliability of full-duplex communication.

In some optional embodiments, when configuring the resource set of PUCCH, the base station may not distinguish between the time unit types, that is, the base station uniformly configures the resource set of PUCCH for the above-mentioned first type of time unit and second type of time unit. Furthermore, the base station can instruct the terminal to perform PUCCH transmission for different types of time units respectively.

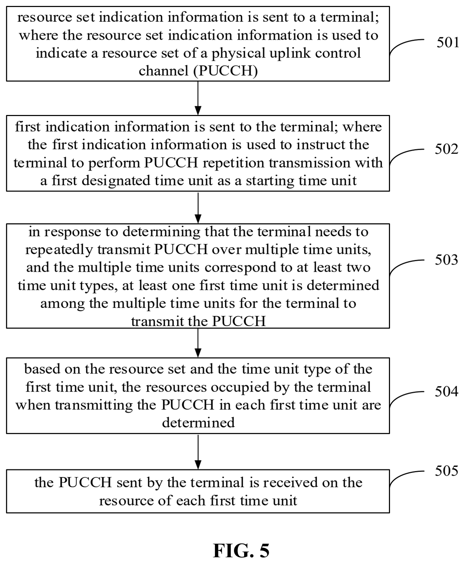

For non-periodic transmission of PUCCH, the terminal enables the PUCCH repetition. In this case, the terminal performs PUCCH repetition in consecutive available time units. Referring to FIG. 5, FIG. 5 is a flow chart of a channel transmission method according to an embodiment, which can be performed by a base station. The method may include the following steps:

In step 501, resource set indication information is sent to a terminal; where the resource set indication information is used to indicate a resource set of a physical uplink control channel (PUCCH).

In an embodiment of the present disclosure, the base station may send the resource set indication information to the terminal through a system message or a terminal-specific RRC message, and configure the PUCCH resource set for the terminal through the PUCCH-ConfigCommon parameter in the system message or the PUCCH-Config parameter in the RRC message.

In an embodiment of the present disclosure, the first resource set may include one or more first resources that can be used by the terminal for PUCCH transmission. The first resources may include but are not limited to time domain resources and/or frequency domain resources, and the present disclosure does not limit the number of first resources.

In step 502, first indication information is sent to the terminal; where the first indication information is used to instruct the terminal to perform PUCCH repetition transmission with a first designated time unit as a starting time unit.

In the embodiment of the present disclosure, the first designated time unit may be a first type of time unit or a second type of time unit, which is not limited in the present disclosure.

In step 503, in response to determining that the terminal needs to repeatedly transmit PUCCH over multiple time units, and the multiple time units correspond to at least two time unit types, at least one first time unit is determined among the multiple time units for the terminal to transmit the PUCCH.

In this case, the base station may determine the first time unit in the following manner:

In one possible implementation, the base station may use the first designated time unit as the starting time unit and determine subsequent time units of the first designated time unit type as the first time unit, where the first designated time unit type is the time unit type of the first designated time unit.

In another possible implementation, if the base station determines that the first resource used by the terminal indicated by the DCI or RRC message is located in the frequency domain resource range occupied by the uplink subband in the frequency domain, the base station can use the first designated time unit as the starting time unit and determine the first type of time unit and the second type of time unit among the multiple time units as the first time unit.

In another possible implementation, if the base station indicates through a DCI or RRC message that the first resource used by the terminal is located outside the frequency domain resource range occupied by the uplink subband in the frequency domain, the base station determines that the terminal cannot use the first resource for uplink transmission on the uplink subband. Therefore, the base station can use the first designated time unit as the starting time unit and determine the time unit of the first designated time unit type among multiple time units as the first time unit, and the first designated time unit type is the time unit type of the first designated time unit.

In step 504, based on the resource set and the time unit type of the first time unit, the resources occupied by the terminal when transmitting the PUCCH in each first time unit are determined.

In one possible implementation, when the base station determines that the terminal transmits the PUCCH in a first time unit of the first type, the occupied resources include a first resource that the base station instructs the terminal to use, and the first resource is located in the frequency domain within a range of frequency domain resources occupied by an uplink subband. The first resource is from a first resource set.

In another possible implementation, the terminal may determine that when transmitting the PUCCH in the first time unit of the second type, the occupied frequency domain resources include the first resource. The first resource is from the first resource set, and in this case, the first resource is located in the frequency domain within the frequency domain resource range occupied by the uplink BWP.

In step 505, the PUCCH sent by the terminal is received on the resource of each first time unit.

In the embodiment of the present disclosure, the base station may receive the PUCCH sent by the terminal on the resources determined in each first time unit.

In the above embodiments, the transmission resources occupied by the terminal when non-periodically transmitting PUCCH on different types of time units can be clearly defined, ensuring that the terminal and the base station have a consistent understanding of the PUCCH transmission resources, improving the reliability of PUCCH transmission, reducing the scheduling complexity of the base station scheduling PUCCH transmission, effectively reducing transmission delay, and improving the reliability of full-duplex communication.

In some optional embodiments, when configuring the PUCCH resource set, the base station can distinguish the time unit type, that is, the base station configures the corresponding PUCCH resource set for the above-mentioned first type of time unit and second type of time unit respectively. Furthermore, the base station may not distinguish the time unit type and uniformly instruct the terminal to perform PUCCH transmission.

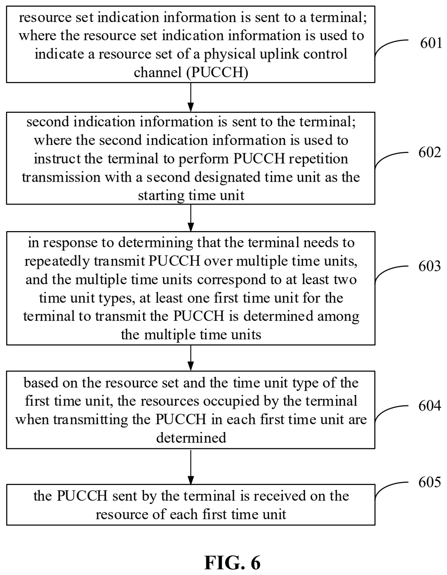

For non-periodic repetition transmission of a PUCCH, the terminal enables PUCCH repetition. In this case, the terminal performs PUCCH repetition in consecutive available time units. As shown in FIG. 6, FIG. 6 is a flow chart of a channel transmission method according to an embodiment, which can be performed by a base station. The method may include the following steps:

In step 601, resource set indication information is sent to a terminal; where the resource set indication information is used to indicate a resource set of a physical uplink control channel (PUCCH).

In an embodiment of the present disclosure, the base station may send the resource set indication information to the terminal through a system message or a terminal-specific RRC message, and configure the PUCCH resource set for the terminal through the PUCCH-ConfigCommon parameter in the system message or the PUCCH-Config parameter in the RRC message.

The resource set may include: a second resource set corresponding to the first type; and a third resource set corresponding to the second type.

The number of second resources included in the second resource set may be one or more, and the number of third resources included in the third resource set may also be one or more, which is not limited in this disclosure. The second resources may include time domain resources and/or frequency domain resources, and the third resources may include time domain resources and/or frequency domain resources.

In step 602, second indication information is sent to the terminal; where the second indication information is used to instruct the terminal to perform PUCCH repetition transmission with a second designated time unit as the starting time unit.

In the embodiment of the present disclosure, the second designated time unit may be a first type of time unit or a second type of time unit, which is not limited in the present disclosure.

In step 603, in response to determining that the terminal needs to repeatedly transmit PUCCH over multiple time units, and the multiple time units correspond to at least two time unit types, at least one first time unit for the terminal to transmit the PUCCH is determined among the multiple time units.

In one possible implementation, the base station uses the second designated time unit as the starting time unit and determines subsequent time units of the second designated time unit type as the first time unit, where the second designated time unit type is the time unit type of the second designated time unit.

In another possible implementation, if the base station indicates through a DCI or RRC message that the second resource used by the terminal is located in the frequency domain resource range occupied by the uplink subband in the frequency domain, the base station can use the second designated time unit as the starting time unit and determine both subsequent first type time units and second type time units as first time units.

In another possible implementation, if the base station indicates through a DCI or RRC message that the second resource used by the terminal is located outside the frequency domain resource range occupied by the uplink subband in the frequency domain, then it is determined that the terminal cannot use the second resource for uplink transmission on the uplink subband, and the base station may use the second designated time unit as the starting time unit and determine the time unit of the second designated time unit type as the first time unit. The second designated time unit type is the time unit type of the second designated time unit.

In step 604, based on the resource set and the time unit type of the first time unit, the resources occupied by the terminal when transmitting the PUCCH in each first time unit are determined.

In an embodiment of the present disclosure, if the base station determines that the first time unit is a first type of time unit, it determines that the resource includes a second resource that the base station indicates the terminal to use through a DCI or RRC message, and if the base station determines that the first time unit is a second type of time unit, it determines that the resource includes a third resource that the base station indicates the terminal to use through a DCI or RRC message.

The second resource is from the second resource set, and the third resource is from the third resource set.

In step 605, the PUCCH sent by the terminal is received on the resource of each first time unit.

In the embodiment of the present disclosure, the base station may receive the PUCCH sent by the terminal on the resources determined in each first time unit.

In the above embodiments, the transmission resources occupied by the terminal when non-periodically transmitting PUCCH on different types of time units can be clarified, ensuring that the terminal and the base station have a consistent understanding of the PUCCH transmission resources, improving the reliability of PUCCH transmission, reducing the scheduling complexity of the base station scheduling PUCCH transmission, effectively reducing transmission delay, and improving the reliability of full-duplex communication.

In some optional embodiments, when configuring the PUCCH resource set, the base station can distinguish the time unit type, that is, the base station configures the corresponding PUCCH resource set for the above-mentioned first type of time unit and second type of time unit respectively. Furthermore, the base station may not distinguish the time unit type and uniformly instruct the terminal to perform PUCCH repetition transmission.

For the PUCCH that is non-periodically repeatedly transmitted, the terminal enables PUCCH repetition. In this case, the terminal performs PUCCH repetition in consecutive available time units.

The base station may send DCI to the terminal, where the PRI field included in the DCI is used to indicate the second resource and the third resource used by the terminal.

In one example, the DCI includes a first PRI field and a second PRI field, where the first PRI field is used to indicate the second resource, and the second PRI field is used to indicate the third resource.

The base station indicates the identifier of the second resource by the bit value of the three bits occupied by the first PRI field, and indicates the identifier of the third resource by the bit value of the three bits occupied by the second PRI field. The terminal has determined the second resource set and the third resource set through a system message or RRC message sent by the base station.

The resource set indexes corresponding to different bit values can be agreed upon through a protocol, as shown in Table 1, for example.

In another example, the DCI includes a third PRI field, and the third PRI field is used to jointly indicate the second resource and the third resource.

The combination of resource identifiers corresponding to different bit values may be agreed upon through a protocol, as shown in Table 2, for example.

Optionally, the base station can indicate the identifier of the second resource and the identifier of the third resource through different RRC messages, or indicate the identifier of the second resource and the identifier of the third resource through the same RRC message. The indication method is similar to the indication method through the PRI field of DCI, and will not be repeated here.

In the above embodiment, the base station can indicate the second resource and the third resource used by the terminal to the terminal through DCI, which is simple to implement and has high availability.

In some optional embodiments, when configuring the resource set of PUCCH, the base station may not distinguish between the time unit types, that is, the base station uniformly configures the resource set of PUCCH for the above-mentioned first type of time unit and second type of time unit. Furthermore, the base station can instruct the terminal to perform PUCCH transmission for different types of time units respectively.

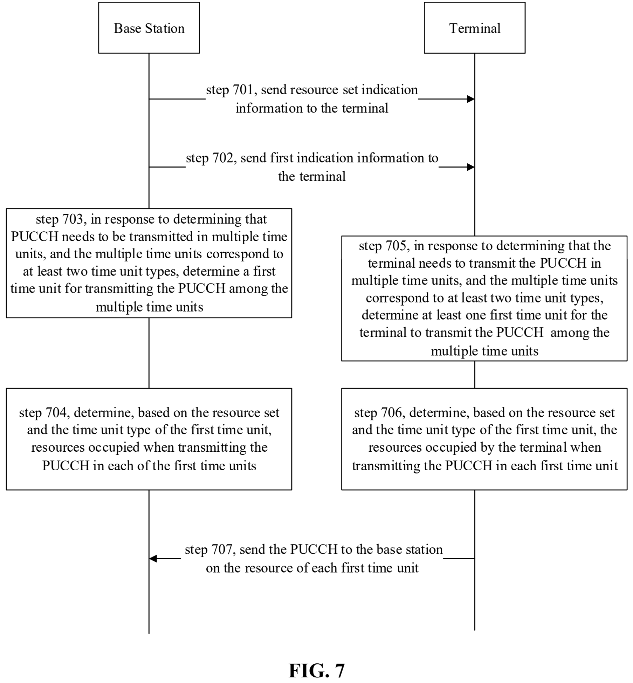

For non-periodic transmission of PUCCH, the terminal enables PUCCH repetition, and the terminal performs PUCCH repetition in consecutive available time units. Referring to FIG. 7, FIG. 7 is a flow chart of a channel transmission method according to an embodiment, which may include the following steps:

In step 701, the base station sends resource set indication information to the terminal; where the resource set indication information is used to indicate a resource set of a physical uplink control channel (PUCCH).

The implementation of step 701 is similar to that of step 501 above, and will not be repeated here.

In step 702, the base station sends first indication information to the terminal; where the first indication information is used to instruct the terminal to perform PUCCH repetition transmission starting from a first designated time unit.

The implementation of step 702 is similar to that of step 502 above, and will not be repeated here.

In step 703, in response to determining that PUCCH needs to be transmitted in multiple time units, and the multiple time units correspond to at least two time unit types, the terminal determines at least one first time unit for transmitting the PUCCH in the multiple time units.

The implementation of step 703 is similar to that of step 203 above, and will not be repeated here.

In step 704, the terminal determines, based on the resource set and the time unit type of the first time unit, resources occupied when transmitting the PUCCH in each of the first time units.

The implementation of step 704 is similar to that of step 204 above, and will not be repeated here.

In step 705, in response to determining that the terminal needs to transmit the PUCCH in multiple time units, and the multiple time units correspond to at least two time unit types, the base station determines at least one first time unit for the terminal to transmit the PUCCH among the multiple time units.

The implementation of step 705 is similar to that of step 503 above, and will not be repeated here.

In step 706, the base station determines, based on the resource set and the time unit type of the first time unit, the resources occupied by the terminal when transmitting the PUCCH in each first time unit.

The implementation of step 706 is similar to that of step 504 above, and will not be repeated here.

In step 707, the terminal sends the PUCCH to the base station on the resource of each first time unit.

The implementation of step 707 is similar to that of step 205 above, and will not be repeated here.

In the above embodiments, the transmission resources occupied by the terminal when non-periodically transmitting PUCCH on different types of time units can be clarified, ensuring that the terminal and the base station have a consistent understanding of the PUCCH transmission resources, improving the reliability of PUCCH transmission, reducing the scheduling complexity of the base station scheduling PUCCH transmission, effectively reducing transmission delay, and improving the reliability of full-duplex communication.

In some optional embodiments, when configuring the PUCCH resource set, the base station can distinguish the time unit type, that is, the base station configures the corresponding PUCCH resource set for the above-mentioned first type of time unit and second type of time unit respectively. Furthermore, the base station may not distinguish the time unit type and uniformly instruct the terminal to perform PUCCH transmission.

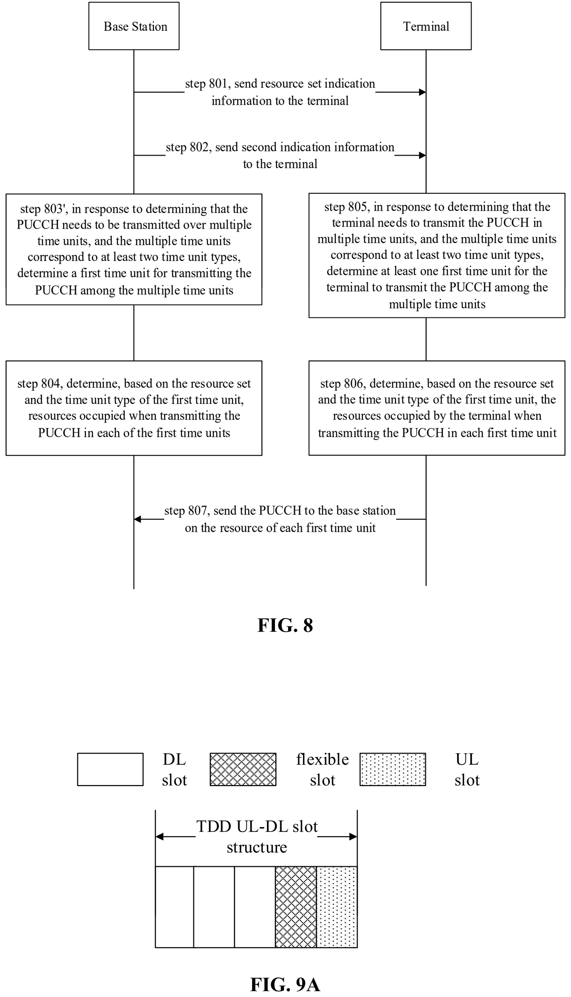

For non-periodic repetition transmission of a PUCCH, the terminal enables PUCCH repetition. In this case, the terminal performs PUCCH repetition in consecutive available time units. As shown in FIG. 8, FIG. 8 is a flow chart of a channel transmission method according to an embodiment. The method may include the following steps:

In step 801, the base station sends resource set indication information to the terminal; where the resource set indication information is used to indicate a resource set of a physical uplink control channel (PUCCH).

The implementation of step 801 is similar to that of the above step 601 and will not be repeated here.

In step 802, second indication information is sent to the terminal; where the second indication information is used to instruct the terminal to perform PUCCH repetition transmission starting from a second designated time unit.

The implementation of step 802 is similar to that of step 602 above, and will not be repeated here.

In step 803, in response to determining that the PUCCH needs to be transmitted over multiple time units, and the multiple time units correspond to at least two time unit types, the terminal determines at least one first time unit for transmitting the PUCCH among the multiple time units.

The implementation of step 803 is similar to that of the above step 303 and will not be repeated here.

In step 804, the terminal determines, based on the resource set and the time unit type of the first time unit, resources occupied when transmitting the PUCCH in each of the first time units.

The implementation of step 804 is similar to that of the above step 304 and will not be repeated here.

In step 805, in response to determining that the terminal needs to transmit the PUCCH in multiple time units, and the multiple time units correspond to at least two time unit types, the base station determines at least one first time unit for the terminal to transmit the PUCCH among the multiple time units.

The implementation of step 805 is similar to that of step 603 above, and will not be repeated here.

In step 806, the base station determines, based on the resource set and the time unit type of the first time unit, the resources occupied by the terminal when transmitting the PUCCH in each first time unit.

The implementation of step 806 is similar to that of step 604 above, and will not be repeated here.

In step 807, the terminal sends the PUCCH to the base station on the resource of each first time unit.

The implementation of step 807 is similar to that of the above step 305 and will not be repeated here.

In the above embodiments, the transmission resources occupied by the terminal when non-periodically transmitting PUCCH on different types of time units can be clarified, ensuring that the terminal and the base station have a consistent understanding of the PUCCH transmission resources, improving the reliability of PUCCH transmission, reducing the scheduling complexity of the base station scheduling PUCCH transmission, effectively reducing transmission delay, and improving the reliability of full-duplex communication.

The above scheme is further illustrated as follows.

In Example 1, it is assumed that the terminal is a Rel-18 or later version terminal with half-duplex capability or full-duplex capability, which is not limited by this application. It is assumed that the base station side performs full-duplex operation on the semi-static DL symbol of the time division duplexing (TDD) frequency band or on the DL symbol indicated by the time slot format indicator (SFI), that is, it schedules downlink data and uplink data at the same time. It should be noted that the base station side can also perform full-duplex operation on the semi-static UL symbol of the TDD frequency band or on the UL symbol indicated by the SFI, that is, it schedules downlink data and uplink data at the same time. The semi-static flexible symbol is determined by the following sent by the base station:
the time division multiplexing uplink and downlink common configuration tdd-UL-DL-ConfigurationCommon; or
the tdd-UL-DL-ConfigurationCommon and the time division multiplexing uplink and downlink dedicated configuration tdd-UL-DL-ConfigurationDedicated.

In this embodiment, the base station indicates the transmission direction of the terminal on the DL symbol in the following two ways:
The bases station configures an UL subband or a DL subband for the terminal. Within the UL subband, the terminal can only perform uplink transmission; and within the DL subband, the terminal can only perform uplink reception. The base station schedules data channels or indicates reference signals within the UL subband or the DL subband.

Of course, the terminal can also perform the full-duplex operation on the semi-static flexible symbol or dynamic flexible symbol, which is not limited by this application.

In this embodiment, it is assumed that the time slot structure configured by the base station through TDD UL-DL configuration is DDDFU, that is, in the TDD configuration period, the first three slots are DL slots, then a flexible slot, and the last slot is a UL slot, as shown in FIG. 9A. Of course, the method of this embodiment can also be directly applied to other TDD UL DL time slot structures, and the present disclosure does not limit this.

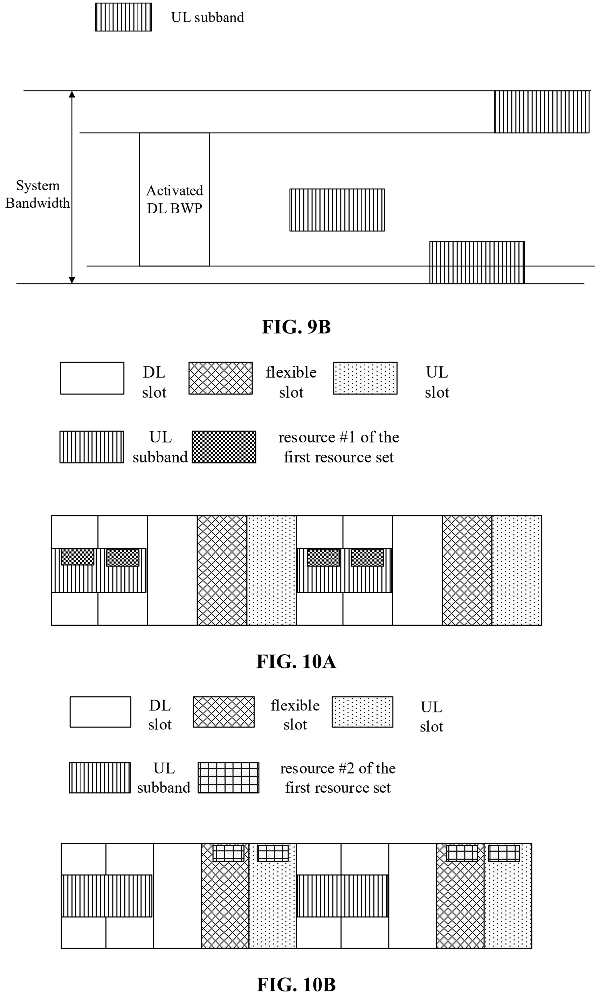

The base station configures a PUCCH-Config or PUCCH-ConfigCommon for each BWP of a terminal, which is used to configure the time-frequency resources for PUCCH transmission within the BWP. In this embodiment, it is assumed that a full-duplex terminal can transmit uplink signals within an SBFD slot. The SBFD slot is configured with a UL subband or a DL subband. In this embodiment, it is assumed that the SBFD slot is a DL slot configured with a UL subband. The relationship between the active DL BWP and the UL subband in the SBFD slot is shown in the figure below. The resources occupied by the UL subband can be completely contained within the DL BWP, partially contained within the DL BWP, or not contained at all within the DL BWP, which is not limited in this application. For example, FIG. 9B shows this.

In this embodiment, the base station configures the PUCCH-Config or PUCCH-ConfigCommon for each BWP of the terminal via an RRC message. This means that the resource sets available for PUCCH transmission in both SBFD slots and non-SBFD slots are identical. This corresponds to the method described above where the base station configures at least one first resource set for the terminal. This first resource set is a uniform resource set configured for the terminal without distinguishing between time unit types.

In this embodiment, it is assumed that the base station instructs the terminal to perform non-periodic PUCCH repetition transmission, i.e., PUCCH repetition, and the number of repetitions R=4. The base station and the terminal determine the frequency domain resources occupied by each repetition transmission of the PUCCH through the following mechanism:

As shown in FIG. 10A, the base station instructs the terminal to perform PUCCH repetition starting from slot #0. Slot #0 is a first-type time unit, namely, an SBFD slot. The terminal uses slot #0, slot #1, slot #5, and slot #6 corresponding to the first type as the first time unit. In other words, the terminal and the base station assume that the PUCCH repetition is transmitted only in the SBFD slot. In other words, when the PUCCH repetition occurs in a non-SBFD slot, the slot is considered unusable for PUCCH transmission. The transmission resources in the SBFD slot are determined by the base station configuration or the PRI in the DCI.

Alternatively, as shown in FIG. 10B, the terminal, instructed by the base station, begins PUCCH repetition in slot #3. Slot #3 is a second-type time unit, namely a non-SBFD slot. Therefore, the terminal and the base station assume that the PUCCH repetition is transmitted only in a non-SBFD slot. In other words, when a PUCCH repetition occurs in an SBFD slot, the slot is considered unavailable for PUCCH transmission. The transmission resources in the non-SBFD slot are determined by the base station configuration or the PRI in the DCI.

Embodiment 2, as described in Embodiment 1, in this embodiment, it is further assumed that the terminal and the base station determine the frequency domain resource location occupied by each PUCCH repetition according to the following method:

If the designated resource set of the PUCCH indicated by the base station is within the frequency domain resource range occupied by the UL subband, the PUCCH repetition can be transmitted in either an SBFD slot or a non-SBFD slot.

Otherwise, the method described in embodiment 1 is used to determine the slot for subsequent PUCCH repetition transmission according to the slot type corresponding to the first designated time unit indicated by the base station.

In Example 3, it is assumed that the terminal is a Rel-18 or later version terminal with half-duplex capability or full-duplex capability, which is not limited by this application. It is assumed that the base station side performs full-duplex operation on the semi-static DL symbol of the time division duplexing (TDD) frequency band or on the DL symbol indicated by the time slot format indicator (SFI), that is, it schedules downlink data and uplink data at the same time. It should be noted that the base station side can also perform full-duplex operation on the semi-static UL symbol of the TDD frequency band or on the UL symbol indicated by the SFI, that is, it schedules downlink data and uplink data at the same time. The semi-static flexible symbol is determined by the following sent by the base station:
the time division multiplexing uplink and downlink common configuration tdd-UL-DL-ConfigurationCommon; or
the tdd-UL-DL-ConfigurationCommon and time division multiplexing uplink and downlink dedicated configuration tdd-UL-DL-ConfigurationDedicated.

In this embodiment, the base station indicates the transmission direction of the terminal on the DL symbol in the following two ways:
The base station configures an UL subband or a DL subband for the terminal. Within the UL subband, the terminal can only perform uplink transmission; within the DL subband, the terminal can only perform uplink reception. The base station schedules data channels or indicates reference signals within the UL subband or the DL subband.

Of course, the terminal can also perform be full-duplex operation on the semi-static flexible symbol or dynamic flexible symbol, which is not limited by this application.

In this embodiment, it is assumed that the time slot structure configured by the base station through TDD UL-DL configuration is DDDFU, that is, in the TDD configuration period, the first three slots are DL slots, then a flexible slot, and the last slot is a UL slot, as shown in FIG. 9A. Of course, the method of this embodiment can also be directly applied to other TDD UL DL time slot structures, and the present disclosure does not limit this.

The base station configures a PUCCH-Config or PUCCH-ConfigCommon for each BWP of a terminal, which is used to configure the time-frequency resources for PUCCH transmission within the BWP. In this embodiment, it is assumed that a full-duplex terminal can transmit uplink signals within an SBFD slot. The SBFD slot is configured with a UL subband or a DL subband. In this embodiment, it is assumed that the SBFD slot is a DL slot configured with a UL subband. The relationship between the active DL BWP and the UL subband in the SBFD slot is shown in the figure below. The resources occupied by the UL subband can be completely contained within the DL BWP, partially contained within the DL BWP, or not contained at all within the DL BWP. This embodiment does not impose any restrictions. For example, FIG. 9B shows this.

In this embodiment, the base station configures a second resource set or a third resource set for the terminal via an RRC message, one for the SBFD slot and one for the non-SBFD slot, respectively. Specifically, the base station can perform this configuration via PUCCH-Config or PUCCH-ConfigCommand, or introduce a new IE; which is not limited by this embodiment. In short, the resource sets used for PUCCH transmission in SBFD slots and non-SBFD slots can be different.

In this embodiment, it is assumed that the base station instructs the terminal to perform PUCCH repetition, and the number of repetition transmissions R=4. The base station and the terminal determine the frequency domain resources occupied by each repetition transmission of the PUCCH through the following mechanism:

In an example, the slot type of the subsequent repetition is determined according to the slot type of the second designated time unit indicated by the base station.

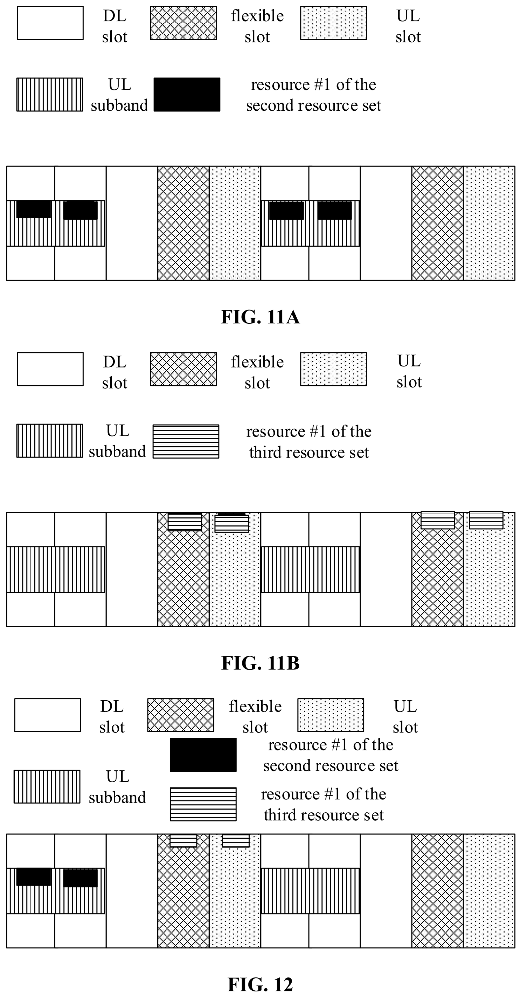

For example, as shown in FIG. 11A, the base station instructs the terminal to perform PUCCH repetition starting from slot#0. Slot#0 is a first-type time unit, namely, an SBFD slot. Therefore, the terminal and the base station assume that the PUCCH repetition is transmitted only in the SBFD slot. In other words, when the PUCCH repetition occurs in a non-SBFD slot, the slot is considered unusable for PUCCH transmission. The transmission resources in the SBFD slot are determined by the base station configuration or the PRI in the DCI. Specifically, the PRI selects the resources for PUCCH transmission in the PUCCH resource set corresponding to the SBFD slot.

In another example, as shown in FIG. 11B, the base station instructs the terminal to perform PUCCH repetition starting from slot#3. Slot#3 is a second type of time unit, namely a non-SBFD slot. The terminal and the base station then assume that the PUCCH repetition is transmitted only in a non-SBFD slot. In other words, when a PUCCH repetition occurs in an SBFD slot, the slot is considered unusable for PUCCH transmission. The transmission resources in the non-SBFD slot are determined by the base station configuration or the PRI in the DCI. In other words, the PRI selects resources for PUCCH transmission in the PUCCH resource set corresponding to the non-SBFD slot.

Embodiment 4, as described in Embodiment 3, in this embodiment, it is further assumed that the terminal and the base station determine the frequency domain resource location occupied by each PUCCH repetition according to the following method:

If the PUCCH resource indicated by the base station is located within the UL subband, the PUCCH repetition can be transmitted in either an SBFD slot or a non-SBFD slot.

Otherwise, the slot for subsequent PUCCH repetition transmission is determined according to the method described in embodiment 3.

Embodiment 5, as described in embodiment 3, when indicating the resources occupied by PUCCH repetition, the base station uses the PRI field in the DCI indicating PUCCH repetition transmission or the RRC message to indicate the resources used for PUCCH transmission on SBFD and non-SBFD slots respectively.

When the PUCCH repetition transmission is triggered by the DCI, the base station indicates the PUCCH resources used for PUCCH transmission in the SBFD slot through two PRI fields, where the PUCCH resources are selected from the second resource set, and indicates the PUCCH resources used for PUCCH transmission in the non-SBFD slot, where the PUCCH resources are selected from the third resource set.

Alternatively, the base station indicates the PUCCH resources used for PUCCH transmission in the SBFD slot and non-SBFD slot respectively through one PRI field, and indicates by using joint coding. Specifically, the base station preconfigures a table of combinations of SBFD-slot PUCCH resources and non-SBFD slot PUCCH resources, and then the base station indicates a row in the table through a PRI in the DCI, where the SBFD-slot PUCCH resources and non-SBFD slot PUCCH resources indicated by the row of the table are selected from the second resource set and the third resource set, respectively.

Similarly, when the base station indicates the resources for PUCCH transmission in the SBFD and non-SBFD slots respectively through the RRC message, the resources may be selected from the second resource set and the third resource set respectively.

As shown in FIG. 12, if the base station instructs the terminal to perform PUCCH repetition starting from slot#0, and R=4, and the second resource that the base station instructs the terminal to use is within the frequency domain resource range occupied by the uplink subband, the terminal can use slot#0 (first type of time unit), slot#1 (first type of time unit), slot#3 (second type of time unit), and slot#4 (second type of time unit) as the first time unit.

The resource #1 in the second resource set is used in the first type of time unit, and resource #1 in the third resource set is used in the second type of time unit for PUCCH repetitive transmission.

Corresponding to the aforementioned embodiment of the method for realizing application functions, the present disclosure also provides an embodiment of a device for realizing application functions.

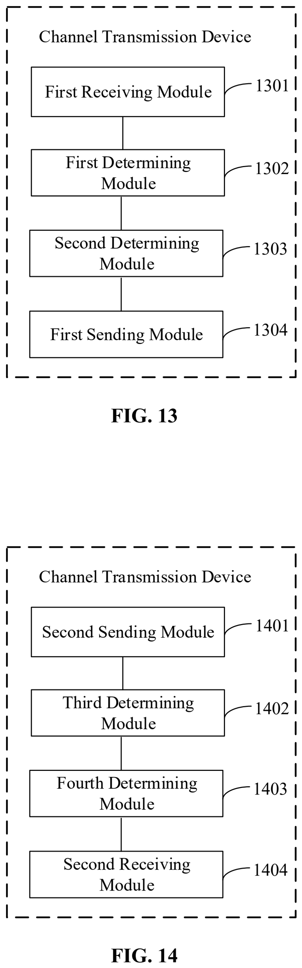

Referring to FIG. 13, FIG. 13 is a block diagram of a channel transmission device according to an exemplary embodiment. The device is applied to a terminal and includes:
a first receiving module 1301, configured to receive resource set indication information sent by a base station; where the resource set indication information is used to indicate a resource set of a physical uplink control channel (PUCCH);
a first determining module 1302, configured to determine, in response to determining that the PUCCH needs to be transmitted over a plurality of time units, and the plurality of time units correspond to at least two time unit types, at least one first time unit in which to transmit the PUCCH from the plurality of time units;
a second determining module 1303, configured to determine, based on the resource set and the time unit type of the first time unit, resources occupied when transmitting the PUCCH in each first time unit; and
a first sending module 1304, configured to send the PUCCH to the base station on the resource of each first time unit.

Referring to FIG. 14, FIG. 14 is a block diagram of a channel transmission device according to an exemplary embodiment. The device is applied to a base station and includes:
a second sending module 1401, configured to send resource set indication information to the terminal; where the resource set indication information is used to indicate a resource set of a physical uplink control channel (PUCCH);
a third determining module 1402, configured to determine, in response to determining that the terminal needs to transmit the PUCCH in a plurality of time units, and the plurality of time units correspond to at least two time unit types, at least one first time unit for the terminal to transmit the PUCCH among the plurality of time units;
a fourth determining module 1403, configured to determine, based on the resource set and the time unit type of the first time unit, resources occupied by the terminal when transmitting the PUCCH in each first time unit; and
a second receiving module 1404, configured to receive the PUCCH sent by the terminal on the resource of each first time unit.

For the device embodiments, since they basically correspond to the method embodiments, the relevant parts can be referred to the partial description of the method embodiments. The device embodiments described above are merely illustrative, where the units described above as separate components may or may not be physically separated, and the components displayed as units may or may not be physical units, that is, they may be located in one place, or they may be distributed on multiple network units. Some or all of the modules may be selected according to actual needs to achieve the purpose of the disclosed solution. A person of ordinary skill in the art can understand and implement it without paying any creative work.

Correspondingly, the present disclosure also provides a computer-readable storage medium, which stores a computer program, and the computer program is used to execute any of the above-mentioned channel transmission methods for the terminal side.

Correspondingly, the present disclosure further provides a computer-readable storage medium, where the storage medium stores a computer program, and the computer program is used to execute any of the above-mentioned channel transmission methods for the base station side.

Correspondingly, the present disclosure further provides a channel transmission device, including:
a processor; and
a memory for storing processor-executable instructions;
where the processor is configured to execute any of the channel transmission methods described above on the terminal side.

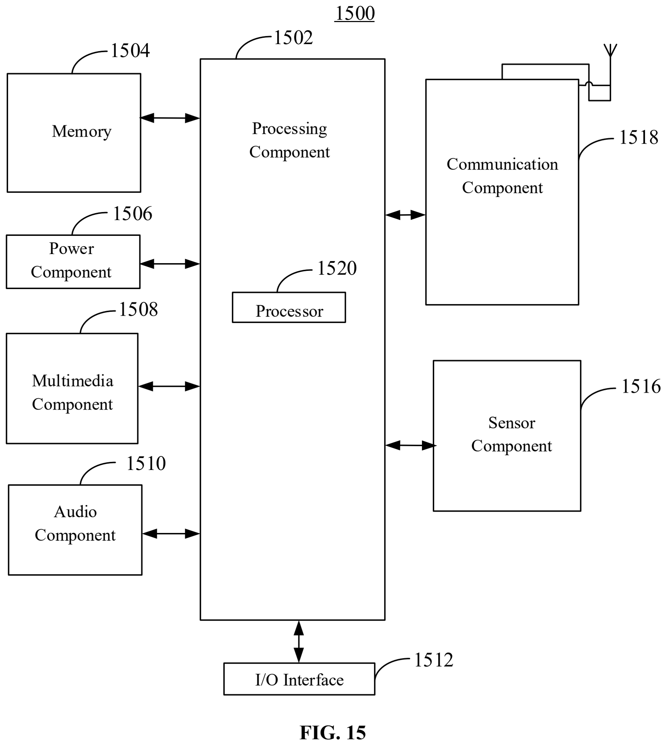

FIG. 15 is a block diagram of an electronic device 1500 according to an exemplary embodiment. For example, the electronic device 1500 may be a mobile phone, tablet computer, e-book reader, multimedia player, wearable device, vehicle-mounted terminal, iPad, smart TV, or other terminal.

Referring to FIG. 15, the electronic device 1500 may include one or more of the following components: a processing component 1502, a memory 1504, a power component 1506, a multimedia component 1508, an audio component 1510, an input/output (I/O) interface 1512, a sensor component 1516, and a communication component 1518.

The processing component 1502 generally controls the overall operation of the electronic device 1500, such as operations associated with display, phone calls, data communications, camera operation, and recording operations. The processing component 1502 may include one or more processors 1520 to execute instructions to complete all or part of the steps of the above-mentioned channel transmission method. In addition, the processing component 1502 may include one or more modules to facilitate interaction between the processing component 1502 and other components. For example, the processing component 1502 may include a multimedia module to facilitate interaction between the multimedia component 1508 and the processing component 1502. For another example, the processing component 1502 may read executable instructions from a memory to implement the steps of a channel transmission method provided in each of the above-mentioned embodiments.

The memory 1504 is configured to store various types of data to support operations on the electronic device 1500. Examples of such data include instructions for any application or method operating on the electronic device 1500, contact data, phone book data, messages, pictures, videos, etc. The memory 1504 can be implemented by any type of volatile or non-volatile storage device, or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk.

The power supply component 1506 provides power to the various components of the electronic device 1500. The power supply component 1506 may include a power management system, one or more power supplies, and other components associated with generating, managing, and distributing power to the electronic device 1500.

The multimedia component 1508 includes a display screen that provides an output interface between the electronic device 1500 and the user. In some embodiments, the multimedia component 1508 includes a front-facing camera and/or a rear-facing camera. When the electronic device 1500 is in an operating mode, such as a capture mode or a video mode, the front-facing camera and/or the rear-facing camera can receive external multimedia data. Each front-facing camera and the rear-facing camera can have a fixed optical lens system or have a variable focal length and optical zoom capability.

The audio component 1510 is configured to output and/or input audio signals. For example, the audio component 1510 includes a microphone (MIC) that is configured to receive external audio signals when the electronic device 1500 is in an operating mode, such as a call mode, a recording mode, or a voice recognition mode. The received audio signals may be further stored in the memory 1504 or transmitted via the communication component 1518. In some embodiments, the audio component 1510 also includes a speaker for outputting audio signals.

The I/O interface 1512 provides an interface between processing component 1502 and peripheral interface modules, which can be a keyboard, a click wheel, a button, or the like. The button may include, but is not limited to, a home button, a volume button, a start button, and a lock button.

The sensor assembly 1516 includes one or more sensors for providing various aspects of the status assessment of the electronic device 1500. For example, the sensor assembly 1516 can detect the open/closed state of the electronic device 1500, the relative positioning of components, such as the display and keypad of the electronic device 1500. The sensor assembly 1516 can also detect changes in the position of the electronic device 1500 or a component of the electronic device 1500, the presence or absence of user touch with the electronic device 1500, the orientation or acceleration/deceleration of the electronic device 1500, and changes in the temperature of the electronic device 1500. The sensor assembly 1516 can include a proximity sensor configured to detect the presence of nearby objects without any physical contact. The sensor assembly 1516 can also include an optical sensor, such as a CMOS or CCD image sensor, for use in imaging applications. In some embodiments, the sensor assembly 1516 can also include an accelerometer, a gyroscope, a magnetic sensor, a pressure sensor, or a temperature sensor.

The communication component 1518 is configured to facilitate wired or wireless communication between the electronic device 1500 and other devices. The electronic device 1500 can access a wireless network based on a communication standard, such as Wi-Fi, 2G, 3G, 4G or 5G, or a combination thereof. In an exemplary embodiment, the communication component 1518 receives a broadcast signal or broadcast-related information from an external broadcast management system via a broadcast channel. In an exemplary embodiment, the communication component 1518 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology, and other technologies.

In an exemplary embodiment, the electronic device 1500 may be implemented by one or more application-specific integrated circuits (ASIC), digital signal processors (DSP), digital signal processing devices (DSPD), programmable logic devices (PLD), field programmable gate arrays (FPGA), controllers, microcontrollers, microprocessors, or other electronic components to perform the above-mentioned channel transmission method.

In an exemplary embodiment, a non-transitory machine-readable storage medium including instructions is also provided, such as a memory 1504 including instructions. The instructions can be executed by the processor 1520 of the electronic device 1500 to implement the above-described channel transmission method. For example, the non-transitory computer-readable storage medium can be a ROM, a random access memory (RAM), a CD-ROM, a magnetic tape, a floppy disk, an optical data storage device, etc.

Correspondingly, the present disclosure further provides a channel transmission device, including:
a processor; and
a memory for storing processor-executable instructions;
where the processor is configured to execute any of the channel transmission methods described above on the base station side.

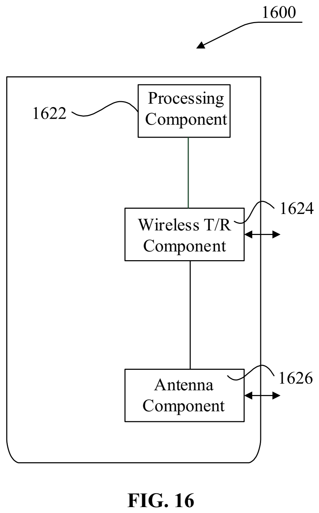

As shown in FIG. 16, which is a schematic diagram illustrating the structure of a channel transmission device 1600 according to an exemplary embodiment. The device 1600 may be provided as a base station. Referring to FIG. 16, the device 1600 includes a processing component 1622, a wireless transmit/receive component 1624, an antenna component 1626, and a signal processing unit specific to a wireless interface. The processing component 1622 may further include at least one processor.

One of the processors in the processing component 1622 may be configured to execute any of the above-mentioned channel transmission methods.

Other embodiments of the present disclosure will readily occur to those skilled in the art after considering the specification and practicing the invention disclosed herein. This disclosure is intended to cover any variations, uses, or adaptations of the present disclosure that follow the general principles of the present disclosure and include common knowledge or customary techniques in the art not disclosed herein. The description and examples are to be considered as exemplary only, with the true scope and spirit of the present disclosure being indicated by the following claims.

It should be understood that the present disclosure is not limited to the exact structures that have been described above and shown in the drawings, and that various modifications and changes can be made without departing from the scope thereof. The scope of the present disclosure is limited only by the appended claims.

## Claims

1. A channel transmission method, executed by a terminal and comprising:
receiving resource set indication information sent by a base station; wherein the resource set indication information is used to indicate a resource set of a physical uplink control channel (PUCCH);
determining, in response to determining that the PUCCH needs to be transmitted over a plurality of time units and the plurality of time units correspond to at least two time unit types, at least one first time unit for transmitting the PUCCH among the plurality of time units;
determining, based on the resource set and a time unit type of the first time unit, resources occupied when transmitting the PUCCH in each first time unit; and
sending the PUCCH to the base station on the resource of each first time unit.

2. The method according to claim 1, wherein the at least two time unit types comprise:
a first type, configured with an uplink subband and having a transmission direction of downlink or flexible; and
a second type, configured with no uplink subband and having a transmission direction of uplink or flexible.

3. The method according to claim 2, wherein the resource set comprises:
a first resource set for the terminal configured by the base station based on an uplink bandwidth part (BWP).

4. The method according to claim 3, further comprising:
receiving first indication information sent by the base station; wherein the first indication information is used to instruct the terminal to perform PUCCH repetition transmission with a first designated time unit as a starting time unit.

5. The method according to claim 4, wherein determining at least one first time unit for transmitting the PUCCH among the plurality of time units comprises:
taking the first designated time unit as the starting time unit, determining a time unit of a first designated time unit type as the first time unit; wherein the first designated time unit type is a time unit type of the first designated time unit.

6. The method according to claim 4, wherein determining at least one first time unit for transmitting the PUCCH in the plurality of time units comprises any one of:
in response to determining that the first resource instructed by the base station to be used by the terminal is located in a frequency domain resource range occupied by the uplink subband in the frequency domain, taking the first designated time unit as the starting time unit, determining a time unit of the first type and a time unit of the second type among the plurality of time units as the first time unit; or
in response to determining that the first resource is located outside the frequency domain resource range occupied by the uplink subband in the frequency domain, taking the first designated time unit as the starting time unit, determining a time unit of a first designated time unit type as the first time unit; wherein the first designated time unit type is a time unit type of the first designated time unit.

7. The method according to any one of claims 3 to 6, wherein determining, based on the resource set and the time unit type of the first time unit, resources occupied when transmitting the PUCCH in each first time unit comprises any one of:
in response to determining that the first time unit is a time unit of the first type, determining that the resource comprises a first resource that the base station instructs the terminal to use, and the first resource is located in a frequency domain resource range occupied by the uplink subband in the frequency domain; or
in response to determining that the first time unit is a time unit of the second type, determining that the resource comprises the first resource.

8. The method according to claim 2, wherein the resource set comprises:
a second resource set corresponding to the first type; and
a third resource set corresponding to the second type.

9. The method according to claim 8, further comprising:
receiving second indication information sent by the base station; wherein the second indication information is used to instruct the terminal to perform PUCCH repetition transmission with a second designated time unit as a starting time unit.

10. The method according to claim 9, wherein determining at least one first time unit for transmitting the PUCCH among the plurality of time units comprises:
taking the second designated time unit as the starting time unit, determining a time unit of a second designated time unit type as the first time unit; wherein the second designated time unit type is a time unit type of the second designated time unit.

11. The method according to claim 9, wherein determining at least one first time unit for transmitting the PUCCH among the plurality of time units comprises:
in response to determining that the second resource instructed by the base station to be used by the terminal is located in a frequency domain resource range occupied by the uplink subband in the frequency domain, taking the second designated time unit as the starting time unit, determining a time unit of the first type and a time unit of the second type among the plurality of time units as the first time unit; or
in response to determining that the second resource instructed by the base station is located outside the frequency domain resource range occupied by the uplink subband in the frequency domain, taking the second designated time unit as the starting time unit, determining a time unit of a second designated time unit type as the first time unit; wherein the second designated time unit type is a time unit type of the second designated time unit.

12. The method according to any one of claims 8 to 11, wherein determining, based on the resource set and the time unit type of the first time unit, resources occupied when transmitting the PUCCH in each first time unit comprises:
in response to determining that the first time unit is a time unit of the first type, determining that the resource comprises a second resource that the base station instructs the terminal to use; or
in response to determining that the first time unit is a time unit of the second type, determining that the resource comprises a third resource that the base station instructs the terminal to use.

13. The method according to claim 9, further comprising:
receiving downlink control information (DCI) sent by the base station; wherein the DCI comprises any one of:
a first PRI field and a second PRI field; wherein the first PRI field is used to indicate a second resource used by the terminal, and the second PRI field is used to indicate a third resource used by the terminal; or
a third PRI field; wherein the third PRI field is used to indicate the second resource and the third resource.

14. A channel transmission method, executed by a base station and comprising:
sending resource set indication information to a terminal; wherein the resource set indication information is used to indicate a resource set of a physical uplink control channel (PUCCH);
determining, in response to determining that the terminal needs to transmit the PUCCH over a plurality of time units and the plurality of time units correspond to at least two time unit types, at least one first time unit for the terminal to transmit the PUCCH among the plurality of time units;
determining, based on the resource set and a time unit type of the first time unit, resources occupied by the terminal when transmitting the PUCCH in each first time unit; and
receiving the PUCCH sent by the terminal on the resource of each first time unit.

15. The method according to claim 14, wherein the at least two time unit types comprise:
a first type, configured with an uplink subband and having a transmission direction of downlink or flexible; and
a second type, configured with no uplink subband and having a transmission direction of uplink or flexible.

16. The method according to claim 15, wherein the resource set comprises:
a first resource set for the terminal configured by the base station based on an uplink bandwidth part (BWP).

17. The method according to claim 16, further comprising:
sending first indication information to the terminal; wherein the first indication information is used to instruct the terminal to perform PUCCH repetition transmission with a first designated time unit as a starting time unit.

18. The method according to claim 17, wherein determining at least one first time unit for the terminal to transmit the PUCCH among the plurality of time units comprises:
taking the first designated time unit as the starting time unit, determining a time unit of a first designated time unit type as the first time unit; wherein the first designated time unit type is a time unit type of the first designated time unit.

19. The method according to claim 17, wherein determining at least one first time unit for the terminal to transmit the PUCCH in the plurality of time units comprises any one of:
in response to determining that instructed first resource to be used by the terminal is located in a frequency domain resource range occupied by the uplink subband in the frequency domain, taking the first designated time unit as the starting time unit, determining a time unit of the first type and a time unit of the second type among the plurality of time units as the first time unit; or
in response to determining that the first resource is located outside the frequency domain resource range occupied by the uplink subband in the frequency domain, taking the first designated time unit as the starting time unit, determining a time unit of a first designated time unit type as the first time unit; wherein the first designated time unit type is a time unit type of the first designated time unit.

20. The method according to any one of claims 16 to 19, wherein determining, based on the resource set and the time unit type of the first time unit, resources occupied by the terminal when transmitting the PUCCH in each first time unit comprises any one of:
in response to determining that the first time unit is a time unit of the first type, determining that the resource comprises a first resource that the base station instructs the terminal to use, and the first resource is located in a frequency domain resource range occupied by the uplink subband in the frequency domain; or
in response to determining that the first time unit is a time unit of the second type, determining that the resource comprises the first resource.

21. The method according to claim 15, wherein the resource set comprises:
a second resource set corresponding to the first type; and
a third resource set corresponding to the second type.

22. The method according to claim 21, further comprising:
sending second indication information to the terminal; wherein the second indication information is used to instruct the terminal to perform PUCCH repetition transmission with a second designated time unit as a starting time unit.

23. The method according to claim 22, wherein determining at least one first time unit for the terminal to transmit the PUCCH among the plurality of time units comprises:
taking the second designated time unit as the starting time unit, determining a time unit of a second designated time unit type as the first time unit; wherein the second designated time unit type is a time unit type of the second designated time unit.

24. The method according to claim 22, wherein determining at least one first time unit for the terminal to transmit the PUCCH among the plurality of time units comprises:
in response to determining that instructed second resource to be used by the terminal is located in a frequency domain resource range occupied by the uplink subband in the frequency domain, taking the second designated time unit as the starting time unit, determining a time unit of the first type and a time unit of the second type among the plurality of time units as the first time unit; or
in response to determining that the second resource is located outside the frequency domain resource range occupied by the uplink subband in the frequency domain, taking the second designated time unit as the starting time unit, determining a time unit of a second designated time unit type as the first time unit; wherein the second designated time unit type is a time unit type of the second designated time unit.

25. The method according to any one of claims 21 to 24, wherein determining, based on the resource set and the time unit type of the first time unit, resources occupied by the terminal when transmitting the PUCCH in each first time unit comprises:
in response to determining that the first time unit is a time unit of the first type, determining that the resource comprises a second resource that the base station instructs the terminal to use; or
in response to determining that the first time unit is a time unit of the second type, determining that the resource comprises a third resource that the base station instructs the terminal to use.

26. The method according to claim 22, further comprising:
sending downlink control information (DCI) to the terminal; wherein the DCI comprises any one of:
a first PRI field and a second PRI field; wherein the first PRI field is used to indicate a second resource used by the terminal, and the second PRI field is used to indicate a third resource used by the terminal; or
a third PRI field; wherein the third PRI field is used to indicate the second resource and the third resource.

27. A channel transmission device, applied to a terminal and comprising:
a first receiving module, configured to receive resource set indication information sent by a base station; wherein the resource set indication information is used to indicate a resource set of a physical uplink control channel (PUCCH);
a first determining module, configured to determine, in response to determining that the PUCCH needs to be transmitted over a plurality of time units and the plurality of time units correspond to at least two time unit types, at least one first time unit for transmitting the PUCCH among the plurality of time units;
a second determining module, configured to determine, based on the resource set and a time unit type of the first time unit, resources occupied when transmitting the PUCCH in each first time unit; and
a first sending module, configured to send the PUCCH to the base station on the resource of each first time unit.

28. A channel transmission device, applied to a base station and comprising:
a second sending module, configured to send resource set indication information to a terminal; wherein the resource set indication information is used to indicate a resource set of a physical uplink control channel (PUCCH);
a third determining module, configured to determine, in response to determining that the terminal needs to transmit the PUCCH over a plurality of time units and the plurality of time units correspond to at least two time unit types, at least one first time unit for the terminal to transmit the PUCCH among the plurality of time units;
a fourth determining module, configured to determine, based on the resource set and a time unit type of the first time unit, resources occupied by the terminal when transmitting the PUCCH in each first time unit; and
a second receiving module, configured to receive the PUCCH sent by the terminal on the resource of each first time unit.

29. A computer-readable storage medium, wherein a computer program is stored on the storage medium, and wherein the computer program is used to execute the channel transmission method according to any one of claims 1 to 13.

30. A computer-readable storage medium, wherein a computer program is stored on the storage medium, and wherein the computer program is used to execute the channel transmission method according to any one of claims 14 to 26.

31. A channel transmission device, comprising:
a processor; and
a memory for storing processor-executable instructions;
wherein the processor is configured to execute the channel transmission method according to any one of claims 1 to 13.

32. A channel transmission device, comprising:
a processor; and
a memory for storing processor-executable instructions;
wherein the processor is configured to execute the channel transmission method according to any one of claims 14 to 26.
